(19) Europäisches Patentamt / European Patent Office / Office européen des brevets

(11) **EP 4 633 096 A1**

(12) **EUROPEAN PATENT APPLICATION**
published in accordance with Art. 153(4) EPC


(43) Date of publication:
**15.10.2025 Bulletin 2025/42**

(21) Application number: **23920734.3**

(22) Date of filing: **28.09.2023**

(51) International Patent Classification (IPC):
***H04L 27/148*** *(2006.01)*

(52) Cooperative Patent Classification (CPC):
**H04L 25/03; H04L 27/148**

(86) International application number:
**PCT/CN2023/122368**

(87) International publication number:
**WO 2024/164542 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.02.2023 CN 202310095094**



(71) Applicant: **Guangzhou Anyka Microelectronics Co., Ltd.**
**Guangzhou, Guangdong 510555 (CN)**

(72) Inventors:
- **PENG, Yuefeng**
  **Guangzhou, Guangdong 510555 (CN)**
- **YU, Mao**
  **Guangzhou, Guangdong 510555 (CN)**
- **YUAN, Meng**
  **Guangzhou, Guangdong 510555 (CN)**
- **XIONG, Jun**
  **Guangzhou, Guangdong 510555 (CN)**
- **HU, Norman Shengfa**
  **Guangzhou, Guangdong 510555 (CN)**

(74) Representative: **Metida**
**Gyneju str. 16**
**01109 Vilnius (LT)**


# (54) GFSK SIGNAL RECEIVING METHOD AND APPARATUS, AND ELECTRONIC DEVICE AND STORAGE MEDIUM


(57) The present disclosure relates to a technical field of signal processing, and provides a Gauss frequency shift keying (GFSK) signal receiving method and apparatus, an electronic device, and a storage medium. The GFSK receiving method includes: in a GFSK receiver, obtaining, based on a receiving end, a frequency value after phase differencing; performing inverse Gaussian filtering on a decoded frequency value through a preset inverse Gaussian filter, and obtaining a filtered frequency value, where the inverse Gaussian filter is a filter constructed based on composition information of a transmitted signal; and performing accumulation based on the filtered frequency value, making a decision, and obtaining decoded data of a received signal. The present disclosure can improve decoding performance of the GFSK receiver.


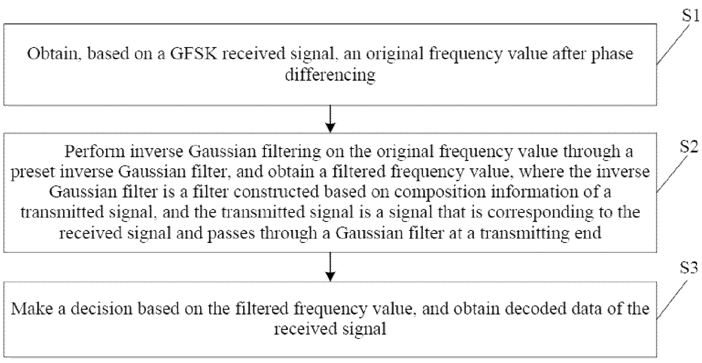


FIG. 1

EP 4 633 096 A1

## Description

### TECHNICAL FIELD

The present disclosure relates to a technical field of signal processing, and in particular, to a Gauss frequency shift keying (GFSK) signal receiving method and apparatus, an electronic device, and a storage medium.

### BACKGROUND

In the Bluetooth signal transmission technology, Gauss frequency shift keying (GFSK) modulation is often used. At a transmitter, the Gaussian filtering is used, which can reduce a bandwidth occupied by a transmitted signal and effectively suppress interference to an adjacent channel. However, the GFSK modulation also brings certain inter-symbol interference. In a decoding process, a receiver is simultaneously suffered by the inter-symbol interference, Gaussian white noise, and other factors, which may result in "phase inversion" in judging based on acquired frequency information and consequently cause a decoding error. It can be seen that decoding performance of a receiver is poor in the prior art.

### SUMMARY

The present disclosure provides a GFSK signal receiving method and apparatus, an electronic device, and a storage medium, which can improve decoding performance at a receiver.

According to a first aspect, an embodiment of the present disclosure provides a GFSK signal receiving method. The GFSK signal receiving method can be applied to a receiver of a Bluetooth signal, and includes:

obtaining, based on a GFSK received signal, an original frequency value after phase differencing;
performing inverse Gaussian filtering on the original frequency value through a preset inverse Gaussian filter, and obtaining a filtered frequency value, where the inverse Gaussian filter is a filter constructed based on composition information of a transmitted signal, and the transmitted signal is a signal that is corresponding to the received signal and passes through a Gaussian filter at a transmitting end; and
making a decision based on the filtered frequency value, and obtaining decoded data of the received signal.

In an embodiment, the making a decision based on the filtered frequency value, and obtaining decoded data of the received signal includes:

performing a cumulative sum operation on each frequency in the filtered frequency value, and obtaining a cumulative sum of the frequency; and
performing symbol decision decoding on the cumulative sum of the frequency, and obtaining the decoded data of the received signal.

In an embodiment, the GFSK signal receiving method further includes:

determining a coefficient of the inverse Gaussian filter based on the composition information of the transmitted signal; and
constructing the inverse Gaussian filter based on the coefficient of the inverse Gaussian filter.

In an embodiment, the composition information of the transmitted signal includes the number N of correlated symbols and a coefficient F of the Gaussian filter at the transmitting end, where F={f(1), f(2), ..., f[(2N+1)*M]}, where M represents the corresponding number of sampling points within duration of one data symbol in the receiver, and M is a natural number; and in the Gaussian filter, a current symbol is correlated with the preceding N symbols and the following N symbols, where N represents the number of correlated symbols both preceding and following the current symbol, and N is a natural number;

the coefficient of the inverse Gaussian filter includes an intermediate vector $g_0$, a preceding vector $g_{-n}$, and a succeeding vector $g_n$;
the determining a coefficient of the inverse Gaussian filter based on the composition information of the transmitted signal includes:
determining the intermediate vector $g_0$, the preceding vector $g_{-n}$, and the succeeding vector $g_n$ based on the number M of the sampling points, the number N of the correlated symbols, and the coefficient F of the Gaussian filter at the transmitting end, where

$$g_0 = [g_{0,1}, g_{0,2}, \cdots, g_{0,i} \cdots, g_{0,M}],\ g_{0,i} = \frac{1}{f[(N+1)*M+2-i]};$$

$$g_{-n} = [g_{-n,1}, g_{-n,2}, \cdots, g_{-n,i} \cdots, g_{-n,M}], \quad g_{-n,i} = -f\{[(N-n)+1]*M+2-i\}*g_{0,i};$$

$$g_n = [g_{n,1}, g_{n,2}, \cdots, g_{n,i} \cdots, g_{n,M}], \quad g_{n,i} = -f\{[(N+n)+1]*M+2-i\}*g_{0,i};$$

$$n = 1 - N, i = 1 - M;$$

and

when i=1 and n=N, performing a zero padding operation on the Gaussian filter, namely f{[(N+N)+1]*M+1}=0; and

the constructing the inverse Gaussian filter based on the coefficient of the inverse Gaussian filter includes:

constructing the inverse Gaussian filter G=[$g_{-n}$, $g_{-n+1}$, ...,$g_0$, $g_1$, ..., $g_{n-1}$, $g_0$] based on the intermediate vector $g_0$, the preceding vector $g_{-n}$, and the succeeding vector $g_n$.

In an embodiment, the obtaining, based on a GFSK received signal, an original frequency value after phase differencing includes:

performing radio frequency signal mixing and filtering, phase calculation, differentiation, and scaling on the GFSK received signal, and obtaining the original frequency value.

In an embodiment, the performing inverse Gaussian filtering on the original frequency value through a preset inverse Gaussian filter includes:

inputting the original frequency value into the preset inverse Gaussian filter, such that the inverse Gaussian filter performs the inverse Gaussian filtering on the original frequency value according to a following formula:

$$y(k,i) = g_{0,i} * x(k,i) + \sum_{n=-N}^{-1} sign\big(x(k-n,B)\big) * g_{-n,i} + \sum_{n=1}^{N} sign\big(x(k+n,B)\big) * g_{n,i};$$

where k represents a $k^{th}$ symbol, i represents a sequence number of a sampling point within the $k^{th}$ symbol, $i \in [1,M]$, and $sign(\cdot)$ represents an operation that extracts a sign of a number;

$$sign(x) = \begin{cases} 1, when\ x \geq 0 \\ -1, when\ x < 0 \end{cases}$$

where $x(k, 1)$, $x(k, 2)$, ..., and $x(k, M)$ represent values of sampling points of a $k^{th}$ symbol in an original frequency, and $x(k - n, B)$ and $x(k + n, B)$ respectively represent a value of a corresponding best sampling point in the preceding n symbols of the $k^{th}$ symbol and a value of a corresponding best sampling point in the following n symbols of the $k^{th}$ symbol.

According to a second aspect, an embodiment of the present disclosure provides a GFSK signal receiving apparatus, including:

a frequency value obtaining module configured to obtain, based on a GFSK received signal, an original frequency value after phase differencing;

an inverse Gaussian filtering module configured to perform inverse Gaussian filtering on the original frequency value through a preset inverse Gaussian filter, and obtain a filtered frequency value, where the inverse Gaussian filter is a filter constructed based on composition information of a transmitted signal, and the transmitted signal is a signal that is corresponding to the received signal and passes through a Gaussian filter at a transmitting end; and

a decision decoding module configured to make a decision based on the filtered frequency value, and obtain decoded data of the received signal.

According to a third aspect, an embodiment of the present disclosure provides an electronic device, including a memory, a processor, and a computer program stored in the memory and executable on the processor, where the processor executes the program to implement the GFSK signal receiving method described in any one of the above embodiments.

According to a fourth aspect, an embodiment of the present disclosure provides a computer-readable storage medium, where the computer-readable storage medium stores a computer program, and the computer program is executed by a processor to implement the GFSK signal receiving method described in any one of the above embodiments.

In conclusion, compared with the prior art, the technical solutions provided in the embodiments of the present disclosure have at least following beneficial effects:

The embodiments of the present disclosure provide a GFSK signal receiving method. An original frequency value is obtained based on a GFSK received signal. Then inverse Gaussian filtering is performed on the original frequency value through a preset inverse Gaussian filter, and a filtered frequency value is obtained. The inverse Gaussian filter is a filter constructed based on composition information of a transmitted signal, which can effectively eliminate inter-symbol interference in the original frequency value. Based on the filtered frequency value, a decision is made, and decoded data of the received signal is obtained. The GFSK signal receiving method can perform the inverse Gaussian filtering on the original frequency value through the preset inverse Gaussian filter, such that inter-symbol interference caused by a Gaussian filter at a signal transmitting end is effectively eliminated, and decoding accuracy of the received signal can be improved, thereby enhancing decoding performance of a receiver.

## BRIEF DESCRIPTION OF THE DRAWINGS

FIG. 1 is a flowchart of a signal receiving method according to an exemplary embodiment of the present disclosure;

FIG. 2 is a flowchart of a signal receiving method according to an exemplary embodiment of the present disclosure;

FIG. 3 is a schematic diagram of capturing transmitted symbol information according to an exemplary embodiment of the present disclosure;

FIG. 4 shows a comparative diagram of effects of schemes according to an exemplary embodiment of the present disclosure;

FIG. 5 is a schematic diagram of Gaussian filtering at a transmitting end according to an exemplary embodiment of the present disclosure;

FIG. 6 shows a time-domain graph of a coefficient of an inverse Gaussian filter (with 16 sampling points) according to an exemplary embodiment of the present disclosure;

FIG. 7 schematically shows a spectrum of an inverse Gaussian filter according to an exemplary embodiment of the present disclosure;

FIG. 8 shows a time-domain graph of a coefficient of an inverse Gaussian filter (with eight sampling points) according to an exemplary embodiment of the present disclosure;

FIG. 9 shows a waveform after a Gaussian filter and an inverse Gaussian filter are applied simultaneously according to an exemplary embodiment of the present disclosure;

FIG. 10 is a structural diagram of a signal receiving apparatus according to an exemplary embodiment of the present disclosure; and

FIG. 11 is a structural diagram of a signal receiving apparatus according to another exemplary embodiment of the present disclosure.

## DETAILED DESCRIPTION

The technical solutions in the embodiments of the present disclosure are clearly and completely described below with reference to the accompanying drawings in the embodiments of the present disclosure. Apparently, the described embodiments are only some rather than all of the embodiments of the present disclosure. All other embodiments obtained by a person of ordinary skill in the art based on the embodiments of the present disclosure without creative efforts shall fall within the protection scope of the present disclosure.

Referring to FIG. 1, an embodiment of the present disclosure provides a GFSK signal receiving method. Description is provided by taking an example in which a signal receiver is an execution entity. The GFSK signal receiving method may include following steps:

Step S1: Obtain, based on a GFSK received signal, an original frequency value after phase differencing.

The received signal is an original signal received by the signal receiver, which is sent to the signal receiver by a signal transmitting end through GFSK modulation. The received signal usually includes a plurality of symbols, and each symbol may correspond to a plurality of frequency values. However, one frequency value can only correspond to one symbol, and each frequency value is a value of a sampling point within its corresponding symbol. The original frequency value includes a frequency value corresponding to each symbol, and in this case, there may be inter-symbol interference between frequencies corresponding to different symbols. The inter-symbol interference is interference caused to a decision of a current symbol because waveforms of a preceding symbol and a succeeding symbol are distorted and broadened due to a non-ideal overall transmission characteristic of a system, and as a result, an elongated tail is generated in a preceding waveform and spread to sampling time of the current symbol.

Specifically, the signal receiver processes the received signal and obtains the original frequency value.

In some implementations, the step S1 may include following steps: performing radio frequency signal mixing and filtering, phase calculation, differentiation, and scaling on the GFSK received signal, and obtaining the original frequency value.

Step S2: Perform inverse Gaussian filtering on the original frequency value through a preset inverse Gaussian filter, and obtain a filtered frequency value, where the inverse Gaussian filter is a filter constructed based on composition information of a transmitted signal, and the transmitted signal is a signal that is corresponding to the received signal and passes through a Gaussian filter at the transmitting end.

The inverse Gaussian filter is the filter constructed based on the composition information of the transmitted signal. The transmitted signal is the signal that corresponds to the received signal and passes through the Gaussian filter at the transmitting end. Therefore, the original frequency value can be filtered based on a characteristic of the Gaussian filter at the signal transmitting end to better eliminate interference, such that each filtered frequency value only carries information of a single symbol corresponding to the filtered frequency value.

Step S3: Make a decision based on the filtered frequency value, and obtain decoded data of the received signal.

The decision may be symbol decision decoding, and the decoded data may be a decoding sequence of the received signal, namely, original data sent by the signal transmitting end.

Specifically, the signal receiver can make the decision based on the filtered frequency value, and obtain the decoded data of the received signal.

In the above embodiment, the GFSK signal receiving method can directly perform the symbol decision decoding on the filtered frequency value after eliminating the inter-symbol interference, thereby obtaining the original transmitted data, and can eliminate inter-symbol interference caused by the Gaussian filter at the signal transmitting end.

In the above steps, it is a mature technology in the prior art that the signal receiver processes the received signal to obtain the original frequency value and makes the decision on the frequency value to obtain the decoded data. In addition, any content not described in detail in this specification belongs to the prior art known to those skilled in the art.

In the above embodiment, according to the GFSK signal receiving method, the original frequency value can be obtained based on the received signal. Then the inverse Gaussian filtering is performed on the original frequency value through the preset inverse Gaussian filter, and the filtered frequency value is obtained. The inverse Gaussian filter is the filter constructed based on the composition information of the transmitted signal, which can effectively eliminate inter-symbol interference in the original frequency value. Based on the filtered frequency value, the decision is made, and the decoded data of the received signal is obtained. The above GFSK signal receiving method can perform the inverse Gaussian filtering on the original frequency value through the preset inverse Gaussian filter, such that the inter-symbol interference caused by the Gaussian filter at the signal transmitting end is effectively eliminated, and decoding accuracy of the received signal can be improved, thereby enhancing decoding performance of the receiver.

After the inter-symbol interference is eliminated, a value of each sampling point within a symbol only carries information of the symbol. However, at this time, each sampling point may also be affected by Gaussian white noise, further resulting in a decoding error.

In other embodiments, to address a problem that a GFSK receiver is affected by the Gaussian white noise and its demodulation performance is decreased, referring to FIG. 2, the step S3 may include following steps:

Step S31: Perform a cumulative sum operation on each frequency in the filtered frequency value, and obtain a cumulative sum of the frequency.

Step S32: Perform the symbol decision decoding on the cumulative sum of the frequency, and obtain the decoded data of the received signal.

Specifically, in order to capture information of an original transmitted symbol to a greatest extent, a cumulative sum of values of a plurality of sampling points within the symbol can be calculated, as shown in a schematic diagram of capturing information of a transmitted symbol in FIG. 3, to further reduce an impact of the Gaussian white noise on the receiver. A formula for calculating the cumulative sum is as follows:

$$Y(k)=y(k, 1)+...y(k, j), ... Y(k, M)$$

In the above formula, Y(k) represents the cumulative sum of the frequency, k represents a sequence number of a current symbol, j represents a sequence number of a corresponding sampling point within the symbol, and its value range may be [1, M]; and M represents a corresponding maximum number of sampling points within the symbol, for example, when a sampling rate is 16 times a data symbol rate, M=16. After the information of the transmitted symbol is captured to a greatest extent, the Y(k) can be obtained. The receiver can obtain the decoding sequence by making the decision on the Y(k).

In the above embodiments, the GFSK signal receiving method can not only eliminate the inter-symbol interference through the inverse Gaussian filter, but also capture the information of the transmitted symbol to a greatest extent through the cumulative sum operation, thereby further suppressing the interference from the Gaussian white noise, reducing a random impact of the white noise on the frequency, and further improving the decoding performance of the receiver.

Based on the above embodiments, the technical solutions in the present disclosure can be verified through simulation. For example, a GFSK symbol transmission rate is set to 1 Msps, a modulation index h is set to 0.32, and a sampling rate of the receiver is set to 16 Mbps. To demonstrate an effect and a gain of the present disclosure, steps such as radio frequency modulation/demodulation/filtering are not be added herein, and a best sampling point is an ideal sampling point. Three schemes are adopted for comparison.

In a scheme (1), decision demodulation is directly performed on a received frequency.

In a scheme (2), the GFSK signal receiving method proposed in the present disclosure is used.

In a scheme (3), the GFSK signal receiving method proposed in the present disclosure is used, and a symbol consistent with that at the transmitting end is used when a preceding symbol and a succeeding symbol are used. This scheme is referred to as a "theoretical value".

FIG. 4 shows a comparative diagram of effects of schemes. By comparing the three schemes, it is obtained that the GFSK signal receiving method proposed in the present disclosure can improve the decoding performance of the receiver by 4 dB (BER=$10^{-3}$), and decoding performance achieved in this scheme is lower than the theoretical value by about 1 dB.

In some embodiments, the GFSK signal receiving method may further include following steps: determining a coefficient of the inverse Gaussian filter based on the composition information of the transmitted signal; and constructing the inverse Gaussian filter based on the coefficient of the inverse Gaussian filter.

Specifically, in the signal receiver, the inverse Gaussian filter is constructed based on the composition information of the transmitted signal. The inverse Gaussian filter may be a one-dimensional vector, and the coefficient of the inverse Gaussian filter is stored in a read-only memory (ROM) of the receiver.

In an implementation of the above embodiments, it is assumed that: a symbol transmission rate of a GFSK transmitting end is R1 symbol per second (sps); a sampling rate of the GFSK receiver is R2 bit per second (bps), and the number M of sampling points is R2/R1; and a length of a coefficient F of the Gaussian filter at the transmitting end is (2N+1)*M. M represents the corresponding number of sampling points within a duration of one data symbol in the receiver, and M is a natural number. In the Gaussian filter, a current symbol is correlated with the preceding N symbols and the following N symbols, where N represents the number of correlated symbols both preceding and following the current symbol, and N is a natural number, which is generally 1 in the GFSK receiver. Therefore, the composition information of the transmitted signal includes the number N of correlated symbols and the coefficient F of the Gaussian filter coefficient at the transmitting end. The F can be expressed as follows: F={f(1), f(2), ..., f[(2N+1)*M]}, where the F may be a 1×(2N+1)*M one-dimensional row vector, or a (2N+1)*M×1 one-dimensional column vector.

The coefficient of the inverse Gaussian filter includes an intermediate vector $g_0$, a preceding vector $g_{-n}$, and a succeeding vector $g_n$.

The determining a coefficient of the inverse Gaussian filter based on the composition information of the transmitted signal includes:

determining the intermediate vector $g_0$, the preceding vector $g_{-n}$, the succeeding vector $g_n$ based on the number M of the sampling points, the number N of the correlated symbols, and the coefficient F of the Gaussian filter at transmitting end, where

$$g_0 = [g_{0,1}, g_{0,2}, \cdots, g_{0,i} \cdots, g_{0,M}],\ g_{0,i} = \frac{1}{f[(N+1)*M+2-i]};$$

$$g_{-n} = [g_{-n,1}, g_{-n,2}, \cdots, g_{-n,i} \cdots, g_{-n,M}],\quad g_{-n,i} = -f\{[(N-n)+1]*M+2-i\}*g_{0,i};$$

$$g_n = [g_{n,1}, g_{n,2}, \cdots, g_{n,i} \cdots, g_{n,M}],\quad g_{n,i} = -f\{[(N+n)+1]*M+2-i\}*g_{0,i};$$

$$n = 1-N, i = 1-M;$$

and

when i=1 and n=N, performing a zero padding operation on the Gaussian filter, namely f{[(N+N)+1]*M+1}=0.

The constructing the inverse Gaussian filter based on the coefficient of the inverse Gaussian filter includes: constructing the inverse Gaussian filter G=[$g_{-n}$, $g_{-n+1}$, ..., $g_0$, $g_1$, ..., $g_{n-1}$, $g_0$] based on the intermediate vector $g_0$, the preceding vector $g_{-n}$, and the succeeding vector $g_n$, where the G is a one-dimensional vector and its dimension may be 1×(2N+1)*M, which corresponds to a dimension of the F. A sub-vector g of the G is a one-dimensional vector, and its dimension is 1×M.

In a specific implementation process, values of sampling points corresponding to a symbol k in an original frequency are x(k,1), x(k,2), ..., and x(k,M), and are subjected to the inverse Gaussian filtering, which can be expressed as follows:

$$y(k,i) = g_{0,i} * x(k,i) + \sum_{n=-N}^{-1} sign\big(x(k-n,B)\big) * g_{-n,i} + \sum_{n=1}^{N} sign\big(x(k+n,B)\big) *$$

$g_{n,i}$, where k represents a $k^{th}$ symbol, i represents a sequence number of a sampling point within the $k^{th}$ symbol, i∈[1,M], and sign represents an operation that extracts a sign of a number,

$$sign(x) = \begin{cases} 1, \text{when } x \geq 0 \\ -1, \text{when } x < 0 \end{cases}$$

where "B" represents a best position, namely, the best sampling point, and x(k-n,B) and x(k+n,B) respectively represent a value of a corresponding best sampling point in the preceding n symbols of the $k^{th}$ symbol and a value of a corresponding best sampling point in the following n symbols of the $k^{th}$ symbol.

After the inter-symbol interference is eliminated, the symbol decision decoding can be directly performed on the y(k). Alternatively, the cumulative sum operation may be further performed to capture the information of the transmitted symbol to a greatest extent, thereby further eliminating the impact of the Gaussian white noise. The cumulative sum can be processed as follows:

$$Y(k) = \sum_{i=1}^{M} y(k,i),$$

Then, a symbol decision is performed on the Y(k), such that the original transmitted data, namely the decoded data of the received signal, can be obtained.

In the above embodiments, the GFSK signal receiving method can construct the inverse Gaussian filter in the receiver to eliminate the inter-symbol interference caused by the Gaussian filter. The inverse Gaussian filter is calculated based on a composition of the transmitted signal that is received, and is more suitable for eliminating the inter-symbol interference in the transmitted signal.

As shown in FIG. 5, at the GFSK signal transmitting end, the Gaussian filter is used, which can reduce a signal bandwidth and reduce interference to an adjacent channel. However, on a GFSK receiving side, an obtained signal is subject to interference from an adjacent symbol, namely the inter-symbol interference. Therefore, an inverse Gaussian filter needs to be designed. The following describes a construction process of an inverse filter in detail through an example.

For example, a symbol rate of a transmitted signal is 1 Msps, the number M of sampling points is 16, and transmitted symbols S(1), S(2), S(3), ..., S(n) are interpolated to obtain an array S'(n)=[S(1), 0, ..., S(2), 0, ...], where there are 15 "0s"; and a coefficient of the Gaussian filter is f(1), f(2), and f(48). After passing through the Gaussian filter, the transmitted signal is [x(1,1), x(1,2)......x(1,16), x(2,1), x(2,2),......x(2,16), x(k,i)], where k represents a sequence number of a symbol and i represents a sequence number of a corresponding sampling point within a symbol. Alternatively, the two-dimensional vector x(k,i) can be transformed into a corresponding one-dimensional vector as follows: X(k*M+i)=x(k,i).

To design the inverse Gaussian filter, a coefficient of the inverse Gaussian filter is obtained based on a composition of the transmitted signal. For convenience of deduction, assuming that a sequence number of a maximum sampling point (best sampling point) corresponding to the first symbol S(1) is 1, it is determined based on a characteristic of the Gaussian filter that a sequence number of a maximum sampling point of the second symbol S(2) is 1+16=17. According to the convolution law X(n)=S'(n)*f(n), a calculation formula for X(17) can be obtained: X(17)=f(25)*S(2)+f(9)*S(1)+f(41)*S(3).

Therefore,

$$S(2)=X(17)/f(25)-f(9)/f(25)*S(1)-f(41)/f(25)S(3).$$

Similarly, for

$$X(18), X(18)=f(24)*S(2)+f(8)*S(1)+f(40)*S(3);$$

and

$$S(2)=X(18)/f(24)-f(8)/f(24)*S(1)-f(40)/f(24)S(3).$$

According to this method, a calculation method for any k symbols can be derived:

$$X(k*16+i-8)=f(34-i)*S(k) + f(18-i)*S(k-1)+f(50-i)*S(k+1)$$

In the above formula, k represents the sequence number of the transmitted symbol, and i represents the sequence number of the sampling point within the symbol, with a value range of 1-16. The Gaussian filter has an even number of coefficients. Therefore, in order to facilitate derivation and calculation, a filter coefficient is made to be odd and not overflow, and a "0" can be added at an end of the filter coefficient f, that is, f (49)=0.

Therefore, the inverse Gaussian filter G can be constructed, where the G is a 1*48 one-dimensional vector (row vector), and G=[g1;g2;g3].

Dimensions of the g1, the g2, and the g3 are all 1*16. The g1 represents a coefficient of the first symbol, the g2 represents a coefficient of the second symbol, and the g3 represents a coefficient of the third symbol. The g1, the g2, and the g3 can be calculated based on the above coefficients:

$$g1 =-[f(17)/f(33), f(16)/f(32), ..., f(3)/f(19), f(2)/f(18)];$$

$$g2= [1/f(33), ..., 1/f(19), 1/f(18)];$$

and

$$g3=-[f(49)/f(33), f(48)/f(32), ..., f(34)/f(18)].$$

Based on the above analysis, a time-domain graph of the coefficient of the inverse Gaussian filter (with 16 sampling points) is shown in FIG. 6, and FIG. 7 schematically shows a spectrum of the inverse Gaussian filter.

When there are eight sampling points, a similar inverse Gaussian filter G1 can be obtained by the above method. A time-domain graph of a coefficient of the inverse Gaussian filter G1 (with eight sampling points) is shown in FIG. 8. A dimension of the one-dimensional vector G1 is 1*24, and dimensions of g4, g5, and g6 are all 1*8:

$$G1=[g4;g5;g6];$$

$$g4 =-[f(9)/f(17), f(8)/f(16), ..., f(2)/f(10)];$$

$$g5= [1/f(17), ..., 1/f(11), 1/f(10)];$$

and

$$g6=-[f(25)/f(17), f(24)/f(16), \ldots, f(18)/f(10)].$$

When the inverse Gaussian filter and the Gaussian filter are applied simultaneously, a waveform shown in FIG. 9 can be obtained. Therefore, at a receiving end, the inverse Gaussian filter can be used to obtain "all energy within a symbol". That is, when a symbol m is demodulated, there are no other symbols within a sampling point range (1-16) of the m that interfere with the m, theoretically eliminating inter-symbol interference.

In a specific implementation process, a specific method for inverse Gaussian filtering is as follows:
x(k-1,1) to x(k-1,16) are values of sampling points corresponding to a preceding symbol; x(k,1) to x(k,16) are values of sampling points corresponding to a current symbol; and x(k+1,1) to x(k+1,16) are values of sampling points corresponding to a succeeding symbol.

Therefore, after inter-symbol interference is removed from the current symbol x(k,1) to x(k,16), y(k,1) to y(k,16) can be calculated as follows:

$$y(k,1)=G(16+1)^* x(k,1) + sign(x(k-1,B))^*G(1) + sign(x(k+1,B))^*G(32+1);$$

$$y(k,i)=G(16+i)^* x(k,i) + sign(x(k-1, B))^*G(i) + sign(x(k+1, B ))^*G(32+i);$$

...

$$y(k,16)=G(16+16)^* x(k,16) +sign(x(k-1,B))^*G(16) +sign(x(k+1,B))^*G(48).$$

As described above, a value range of i is within a range of the number of sampling points, and sign(x) represents a sign function that extracts a sign of x (that is, when x is negative, a value is "-1"; when x is non-negative, the value is "+1"). x(k-1,B) may be a value corresponding to a best sampling point within the preceding symbol. Similarly, x(k+1,B ) may be a value corresponding to a best sampling point within the succeeding symbol.

Taking sampling points X(1) to X(48) of a receiver as an example, the best sampling point is set to a middle point. X(1) to X(16) are sampling points of the first symbol, which can also be represented by x(1,1) to x(1,16); X(17) to X(32) are sampling points of the second symbol, which can also be represented by x(2,1) to x(2,16); and X(33) to X(48) are sampling points of the third symbol, which can also be represented by x(3,1) to x(3,16). It is assumed that x(1,B) and x(2,B) respectively are the values of best sampling points of the preceding symbol and the succeeding symbol. So, a sampling point sequence number corresponding to the second symbol is x(2,1) to x(2,16). Values y(2,1) to y(2,16) obtained through the inverse Gaussian filtering can be calculated as follows:

$$y(2,1)=x(2,1)^*G(17) + sign(x(1,B))^*G(1)+sign(x(2,B))^*G(33);$$

$$y(2,2)=x(2,2)^*G(18) + sign(x(1,B))^*G(2)+sign(x(2,B))^*G(34);$$

...

$$y(2,16)=x(2,16)^*G(24) + sign(x(1,B))^*G(16)+sign(x(2,B))^*G(48).$$

Referring to FIG. 10, another embodiment of the present disclosure provides a GFSK signal receiving apparatus. The GFSK signal receiving apparatus may include a frequency value obtaining module 101, an inverse Gaussian filtering module 102, and a decision decoding module 103.

The frequency value obtaining module 101 is configured to obtain, based on a GFSK received signal, an original frequency value after phase differencing.

The inverse Gaussian filtering module 102 is configured to perform inverse Gaussian filtering on the original frequency value through a preset inverse Gaussian filter, and obtain a filtered frequency value, where the inverse Gaussian filter is a filter constructed based on composition information of a transmitted signal, and the transmitted signal is a signal that is corresponding to the received signal and passes through a Gaussian filter at a transmitting end.

The decision decoding module 103 is configured to make a decision based on the filtered frequency value, and obtain decoded data of the received signal.

In specific implementation, the above GFSK signal receiving apparatus may be a Bluetooth signal receiver, and the frequency value obtaining module 101, the inverse Gaussian filtering module 102, and the decision decoding module 103 included in the GFSK signal receiving apparatus can all be implemented fully or partially through software, hardware, and any combination thereof.

In some embodiments, the decision decoding module 103 is specifically configured to: perform a cumulative sum operation on each frequency in the filtered frequency value, and obtain a cumulative sum of the frequency; and perform symbol decision decoding on the cumulative sum of the frequency, and obtain the decoded data of the received signal.

**In** some embodiments, as shown in FIG. 11, the GFSK signal receiving apparatus further includes:
an inverse Gaussian filter construction module 100 configured to determine a coefficient of the inverse Gaussian filter based on the composition information of the transmitted signal, and construct the inverse Gaussian filter based on the coefficient of the inverse Gaussian filter.

Further, the composition information of the transmitted signal includes the number N of correlated symbols and a coefficient F of the Gaussian filter at the transmitting end, where F={f(1), f(2), ..., f[(2N+1)*M]}, where M represents the corresponding number of sampling points within a duration of one data symbol in a receiver, and M is a natural number; and in the Gaussian filter, a current symbol is correlated with the preceding N symbols and the following N symbols, wherein N represents the number of correlated symbols both preceding and following the current symbol, and N is a natural number.

The coefficient of the inverse Gaussian filter includes an intermediate vector $g_0$, a preceding vector $g_{-n}$, and a succeeding vector $g_n$.

The inverse Gaussian filter construction module 100 is specifically configured to:
determine the intermediate vector $g_0$, the preceding vector $g_{-n}$, and the succeeding vector $g_n$ based on the number M of the sampling points, the number N of the correlated symbols, and the coefficient F of the Gaussian filter at the transmitting end, and construct the inverse Gaussian filter

$$G=[g_{-n},\ g_{-n+1},\ \dots,\ g_0,\ g_1,\ \dots,\ g_{n-1},\ g_0],$$

where

$$g_0 = \left[g_{0,1}, g_{0,2}, \cdots, g_{0,i} \cdots, g_{0,M}\right],\ \ g_{0,i} = \frac{1}{f[(N+1)*M+2-i]};$$

$$g_{-n} = \left[g_{-n,1}, g_{-n,2}, \cdots, g_{-n,i} \cdots, g_{-n,M}\right],\quad g_{-n,i} = -f\{[(N-n)+1]*M+2-i\}*g_{0,i};$$

$$g_n = \left[g_{n,1}, g_{n,2}, \cdots, g_{n,i} \cdots, g_{n,M}\right],\quad g_{n,i} = -f\{[(N+n)+1]*M+2-i\}*g_{0,i};$$

$$n = 1-N, i = 1-M.$$

In some embodiments, the frequency value obtaining module 101 is specifically configured to perform radio frequency signal mixing and filtering, phase calculation, differentiation, and scaling on the GFSK received signal, and obtain the original frequency value.

For specific limitations on the GFSK signal receiving apparatus provided in this embodiment, reference may be made to the above embodiments about the GFSK signal receiving method, and details are not described herein again. The modules of the GFSK signal receiving apparatus may be implemented fully or partially by software, hardware, or any combination thereof. The modules may be embedded in or independent of a processor of an electronic device in a form of hardware, or stored in a memory of the electronic device in a form of software, such that the processor can easily invoke and execute corresponding operations of the modules.

An embodiment of the present disclosure provides an electronic device. The electronic device may include a processor, a memory, a network interface, and a database that are connected through a system bus. The processor of the electronic device is configured to provide computing and control capabilities. The memory of the electronic device includes a non-volatile storage medium and an internal memory. The non-volatile storage medium stores an operating system, a computer program, and a database. The internal memory provides an environment for running the operating system and the computer program in the non-volatile storage medium. The network interface of the electronic device is configured to connect to and communicate with an external terminal through a network. The computer program is executed by the processor to perform the steps of the GFSK signal receiving method in any one of the above embodiments.

For a working process, working details, and a technical effect of the electronic device provided in this embodiment, reference may be made to the above embodiments about the GFSK signal receiving method, and details are not described herein again.

An embodiment of the present disclosure provides a computer-readable storage medium storing a computer program. The computer program is executed by a processor to implement the steps of the GFSK signal receiving method in any one of the above embodiments. The computer-readable storage medium refers to a carrier that stores data, which may include, but is not limited to, a floppy disk, an optical disk, a hard disk, a flash memory, a universal serial bus (USB) flash drive, and/or a memory stick. The computer may be a general-purpose computer, a dedicated computer, a computer network, or another programmable device.

For a working process, working details, and a technical effect of the computer-readable storage medium provided in this embodiment, reference may be made to the above embodiments about the GFSK signal receiving method, and details are not described herein again.

Those of ordinary skill in the art may understand that all or some of the procedures in the method of the above embodiments may be implemented by a computer program instructing related hardware. The computer program may be stored in a non-volatile computer-readable storage medium. When the computer program is executed, the procedures in the embodiments of the above method may be performed. Any reference to a memory, a storage, a database, or other mediums used in various embodiments provided in the present application may include a nonvolatile memory and/or a volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random access memory (RAM) or an external cache memory. As an illustration rather than a limitation, the RAM can be obtained in a plurality of forms, such as a static RAM (SRAM), a dynamic RAM (DRAM), a synchronous DRAM (SDRAM), a double data rate SDRAM (DDRSDRAM), an enhanced SDRAM (ESDRAM), a synchronization link (Synchlink) DRAM (SLDRAM), a Rambus (Rambus) direct RAM (RDRAM), a direct Rambus dynamic RAM (DRDRAM), and a Rambus dynamic RAM (RDRAM).

The technical characteristics of the above embodiments can be employed in arbitrary combinations. To provide a concise description of these embodiments, all possible combinations of all the technical characteristics of the above embodiments may not be described; however, these combinations of the technical characteristics should be construed as falling within the scope defined by the specification as long as no contradiction occurs.

The above embodiments only express several implementations of the present disclosure, and the description thereof is more specific and detailed, but cannot be construed as a limitation on the scope of the present disclosure. It should be noted that, for a person of ordinary skill in the art, several variations and improvements can be made without departing from the concept of the present disclosure, and these variations and improvements all fall within the protection scope of the present disclosure. Therefore, the protection scope of this application shall be subject to the appended claims.

## Claims

1. A Gauss frequency shift keying (GFSK) signal receiving method, comprising:

   obtaining, based on a GFSK received signal, an original frequency value after phase differencing;
   performing inverse Gaussian filtering on the original frequency value through a preset inverse Gaussian filter, and obtaining a filtered frequency value, wherein the inverse Gaussian filter is a filter constructed based on composition information of a transmitted signal, and the transmitted signal is a signal that is corresponding to the received signal and passes through a Gaussian filter at a transmitting end; and
   making a decision based on the filtered frequency value, and obtaining decoded data of the received signal.

2. The GFSK signal receiving method according to claim 1, wherein the making a decision based on the filtered frequency value, and obtaining decoded data of the received signal comprises:

   performing a cumulative sum operation on each frequency in the filtered frequency value, and obtaining a cumulative sum of the frequency; and
   performing symbol decision decoding on the cumulative sum of the frequency, and obtaining the decoded data of the received signal.

3. The GFSK signal receiving method according to any one of claims 1 to 2, further comprising:

   determining a coefficient of the inverse Gaussian filter based on the composition information of the transmitted signal; and
   constructing the inverse Gaussian filter based on the coefficient of the inverse Gaussian filter.

4. The GFSK signal receiving method according to claim 3, wherein the composition information of the transmitted signal comprises the number N of correlated symbols and a coefficient F of the Gaussian filter at the transmitting end, wherein F={f(1), f(2), ..., f[(2N+1)*M]}, wherein M represents the corresponding number of sampling points within a duration of one data symbol in a receiver, and M is a natural number; and in the Gaussian filter, a current symbol is correlated with the preceding N symbols and the following N symbols, wherein N represents the number of correlated symbols both preceding and following the current symbol, and N is a natural number;

   the coefficient of the inverse Gaussian filter comprises an intermediate vector $g_0$, a preceding vector $g_{-n}$, and a succeeding vector $g_n$;
   the determining a coefficient of the inverse Gaussian filter based on the composition information of the transmitted signal comprises:

   determining the intermediate vector $g_0$, the preceding vector $g_{-n}$, and the succeeding vector $g_n$ based on the number M of the sampling points, the number N of the correlated symbols, and the coefficient F of the Gaussian filter at the transmitting end, wherein

$$g_0 = [g_{0,1}, g_{0,2}, \cdots, g_{0,i} \cdots, g_{0,M}],\ g_{0,i} = \frac{1}{f[(N+1)*M+2-i]};$$

$$g_{-n} = [g_{-n,1}, g_{-n,2}, \cdots, g_{-n,i} \cdots, g_{-n,M}], \quad g_{-n,i} = -f\{[(N-n)+1] * M + 2 - i\} * g_{0,i};$$

$$g_n = [g_{n,1}, g_{n,2}, \cdots, g_{n,i} \cdots, g_{n,M}], \quad g_{n,i} = -f\{[(N+n)+1] * M + 2 - i\} * g_{0,i};$$

$$n = 1 - N, i = 1 - M;$$

and
when i=1 and n=N, performing a zero padding operation on the Gaussian filter, namely f{[(N+N)+1]*M+1}=0; and
the constructing the inverse Gaussian filter based on the coefficient of the inverse Gaussian filter comprises: constructing the inverse Gaussian filter G=[$g_{-n}$, $g_{-n+1}$, ...,$g_0$, $g_1$, ..., $g_{n-1}$, $g_0$] based on the intermediate vector $g_0$, the preceding vector $g_{-n}$, and the succeeding vector $g_n$.

**5.** The GFSK signal receiving method according to claim 4, wherein the obtaining, based on a GFSK received signal, an original frequency value after phase differencing comprises:
performing radio frequency signal mixing and filtering, phase calculation, differentiation, and scaling on the GFSK received signal, and obtaining the original frequency value.

**6.** The GFSK signal receiving method according to claim 5, wherein the performing inverse Gaussian filtering on the original frequency value through a preset inverse Gaussian filter comprises:

inputting the original frequency value into the preset inverse Gaussian filter, whereby the inverse Gaussian filter performs the inverse Gaussian filtering on the original frequency value according to a following formula:

$$y(k,i) = g_{0,i} * x(k,i) + \sum_{n=-N}^{-1} sign\big(x(k-n,B)\big) * g_{-n,i} + \sum_{n=1}^{N} sign\big(x(k+n,B)\big) * g_{n,i};$$

wherein k represents a $k^{th}$ symbol, i represents a sequence number of a sampling point within the $k^{th}$ symbol, $i \in [1,M]$, and sign represents an operation that extracts a sign of a number;

$$sign(x) = \begin{cases} 1, when\ x \geq 0 \\ -1, when\ x < 0 \end{cases}$$

wherein $x(k, 1)$, $x(k, 2)$, ..., and $x(k, M)$ represent values of sampling points of a $k^{th}$ symbol in an original frequency, and $x(k - n, B)$ and $x(k + n, B)$ respectively represent a value of a corresponding best sampling point in the preceding n symbols of the $k^{th}$ symbol and a value of a corresponding best sampling point in the following n symbols of the $k^{th}$ symbol.

**7.** A GFSK signal receiving apparatus, comprising:

a frequency value obtaining module configured to obtain, based on a GFSK received signal, an original frequency value after phase differencing;
an inverse Gaussian filtering module configured to perform inverse Gaussian filtering on the original frequency value through a preset inverse Gaussian filter, and obtain a filtered frequency value, wherein the inverse Gaussian filter is a filter constructed based on composition information of a transmitted signal, and the transmitted signal is a signal that is corresponding to the received signal and passes through a Gaussian filter at a transmitting end; and
a decision decoding module configured to make a decision based on the filtered frequency value, and obtain decoded data of the received signal.

**8.** The GFSK signal receiving apparatus according to claim 7, wherein the decision decoding module is configured to:

perform a cumulative sum operation on each frequency in the filtered frequency value, and obtain a cumulative sum of the frequency; and
perform symbol decision decoding on the cumulative sum of the frequency, and obtain the decoded data of the received signal.

**9.** The GFSK signal receiving apparatus according to any one of claims 7 to 8, further comprising:
an inverse Gaussian filter construction module configured to determine a coefficient of the inverse Gaussian filter based on the composition information of the transmitted signal, and construct the inverse Gaussian filter based on the coefficient of the inverse Gaussian filter.

**10.** The GFSK signal receiving apparatus according to claim 9, wherein the composition information of the transmitted signal comprises the number N of correlated symbols and a coefficient F of the Gaussian filter at the transmitting end, wherein F={f(1), f(2), ..., f[(2N+1)*M]}, wherein M represents the corresponding number of sampling points within a duration of one data symbol in a receiver, and M is a natural number; and in the Gaussian filter, a current symbol is correlated with the preceding N symbols and the following N symbols, wherein N represents the number of correlated symbols both preceding and following the current symbol, and N is a natural number;

the coefficient of the inverse Gaussian filter comprises an intermediate vector $g_0$, a preceding vector $g_{-n}$, and a succeeding vector $g_n$;
the inverse Gaussian filter construction module is configured to:

determine the intermediate vector $g_0$, the preceding vector $g_{-n}$, and the succeeding vector $g_n$ based on the number M of the sampling points, the number N of the correlated symbols, and the coefficient F of the Gaussian filter at the transmitting end, wherein

$$g_0 = [g_{0,1}, g_{0,2}, \cdots, g_{0,i} \cdots, g_{0,M}],\ g_{0,i} = \frac{1}{f[(N+1)*M+2-i]};$$

$$g_{-n} = [g_{-n,1}, g_{-n,2}, \cdots, g_{-n,i} \cdots, g_{-n,M}],\quad g_{-n,i} = -f\{[(N-n)+1]*M+2-i\}*g_{0,i};$$

$$g_n = [g_{n,1}, g_{n,2}, \cdots, g_{n,i} \cdots, g_{n,M}],\quad g_{n,i} = -f\{[(N+n)+1]*M+2-i\}*g_{0,i};$$
$$n = 1-N, i = 1-M;$$

when i=1 and n=N, perform a zero padding operation on the Gaussian filter, namely f{[(N+N)+1]*M+1}=0; and construct the inverse Gaussian filter G=[$g_{-n}$, $g_{-n+1}$, ...,$g_0$, $g_1$, ..., $g_{n-1}$, $g_0$] based on the intermediate vector $g_0$, the preceding vector $g_{-n}$, and the succeeding vector $g_n$.

**11.** The GFSK signal receiving apparatus according to claim 7, wherein the frequency value obtaining module is configured to:
perform radio frequency signal mixing and filtering, phase calculation, differentiation, and scaling on the GFSK received signal, and obtain the original frequency value.

**12.** The GFSK signal receiving apparatus according to claim 11, wherein the inverse Gaussian filtering module is configured to:

input the original frequency value into the preset inverse Gaussian filter, whereby the inverse Gaussian filter performs the inverse Gaussian filtering on the original frequency value according to a following formula:

$$y(k,i) = g_{0,i} * x(k,i) + \sum_{n=-N}^{-1} sign(x(k-n,B)) * g_{-n,i} + \sum_{n=1}^{N} sign(x(k+n,B)) * g_{n,i};$$

wherein k represents a $k^{th}$ symbol, i represents a sequence number of a sampling point within the $k^{th}$ symbol, $i \in [1,M]$, and $sign(\cdot)$ represents an operation that extracts a sign of a number;

$$sign(x) = \begin{cases} 1, when\ x \geq 0 \\ -1, when\ x < 0 \end{cases}$$

wherein $x(k, 1)$, $x(k, 2)$, ..., and $x(k, M)$ represent values of sampling points of a $k^{th}$ symbol in an original frequency, and $x(k - n, B)$ and $x(k + n, B)$ respectively represent a value of a corresponding best sampling point in the preceding n symbols of the $k^{th}$ symbol and a value of a corresponding best sampling point in the following n symbols of the $k^{th}$ symbol.

**13.** An electronic device, comprising a memory, a processor, and a computer program stored in the memory and executable on the processor, wherein the processor executes the computer program to implement steps of the GFSK signal receiving method according to any one of claims 1 to 6.

**14.** A computer-readable storage medium, wherein the computer-readable storage medium stores a computer program, and the computer program is executed by a processor to implement steps of the GFSK signal receiving method according to any one of claims 1 to 6.

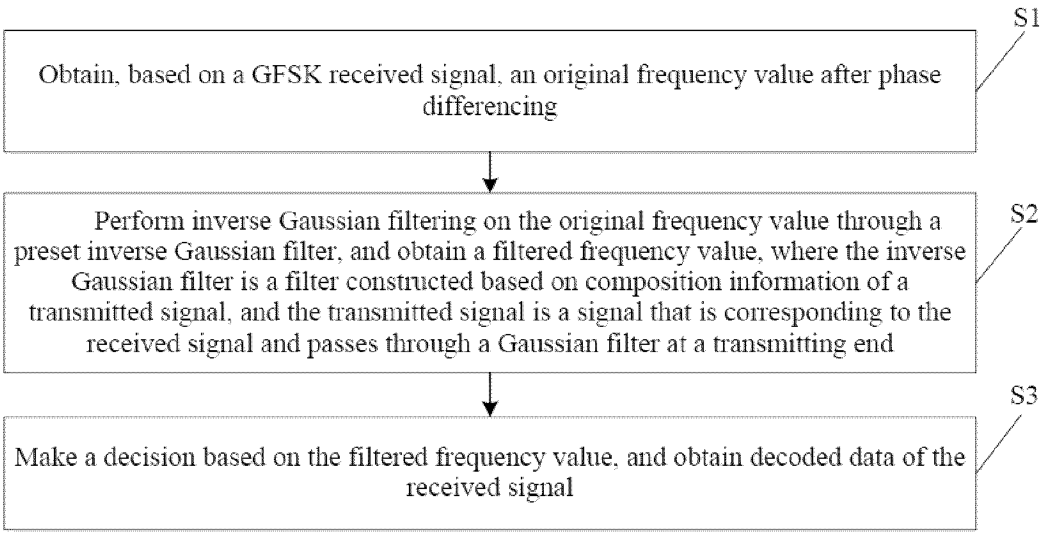
S1
Obtain, based on a GFSK received signal, an original frequency value after phase differencing
S2
Perform inverse Gaussian filtering on the original frequency value through a preset inverse Gaussian filter, and obtain a filtered frequency value, where the inverse Gaussian filter is a filter constructed based on composition information of a transmitted signal, and the transmitted signal is a signal that is corresponding to the received signal and passes through a Gaussian filter at a transmitting end
S3
Make a decision based on the filtered frequency value, and obtain decoded data of the received signal

**FIG. 1**

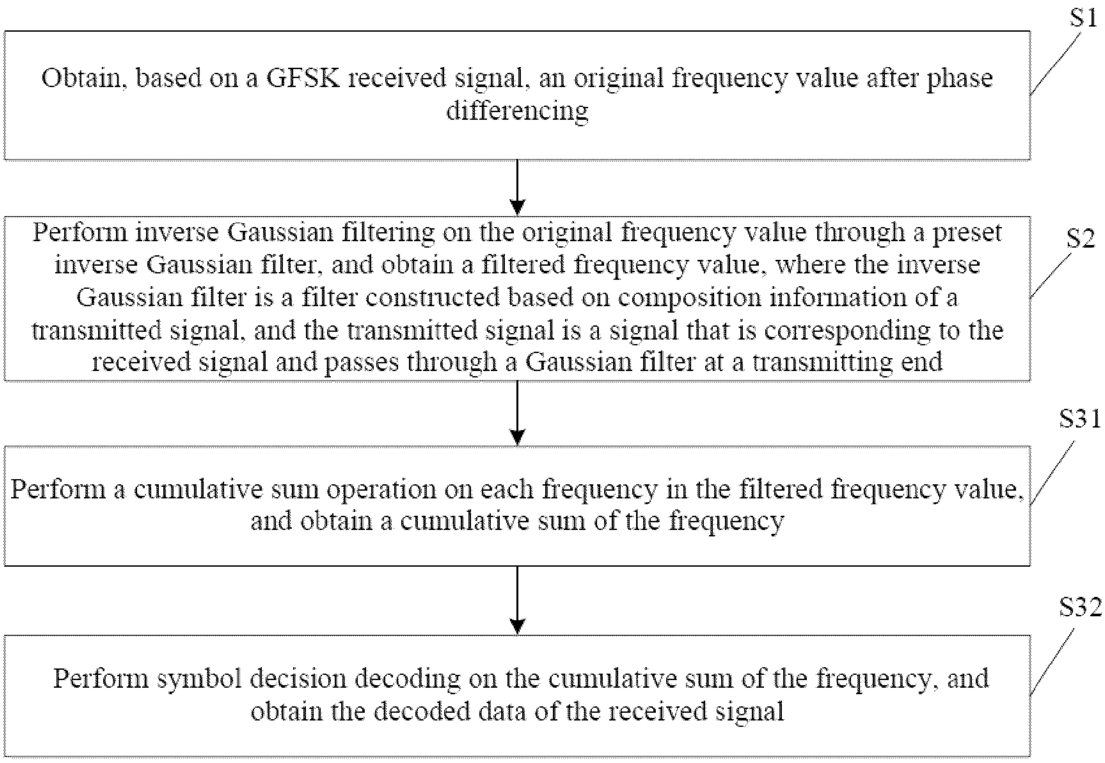
S1
Obtain, based on a GFSK received signal, an original frequency value after phase differencing
S2
Perform inverse Gaussian filtering on the original frequency value through a preset inverse Gaussian filter, and obtain a filtered frequency value, where the inverse Gaussian filter is a filter constructed based on composition information of a transmitted signal, and the transmitted signal is a signal that is corresponding to the received signal and passes through a Gaussian filter at a transmitting end
S31
Perform a cumulative sum operation on each frequency in the filtered frequency value, and obtain a cumulative sum of the frequency
S32
Perform symbol decision decoding on the cumulative sum of the frequency, and obtain the decoded data of the received signal

**FIG. 2**

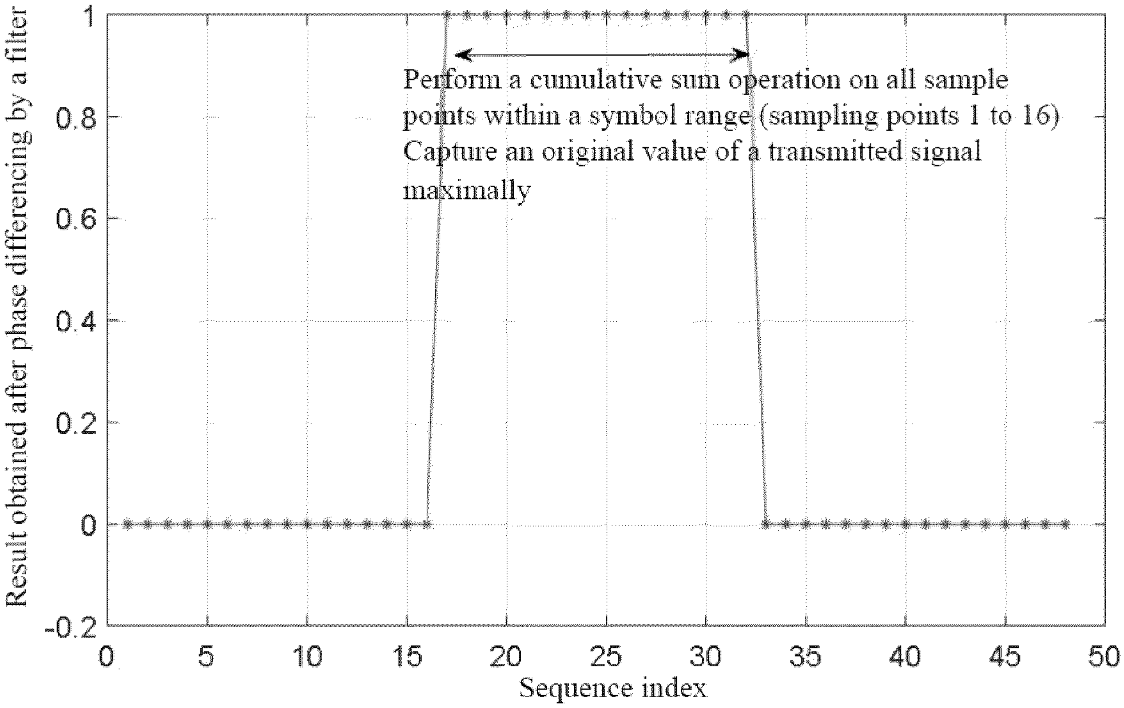
Perform a cumulative sum operation on all sample points within a symbol range (sampling points 1 to 16)
Capture an original value of a transmitted signal maximally
Result obtained after phase differencing by a filter
Sequence index
1
0.8
0.6
0.4
0.2
0
-0.2
0
5
10
15
20
25
30
35
40
45
50

FIG. 3

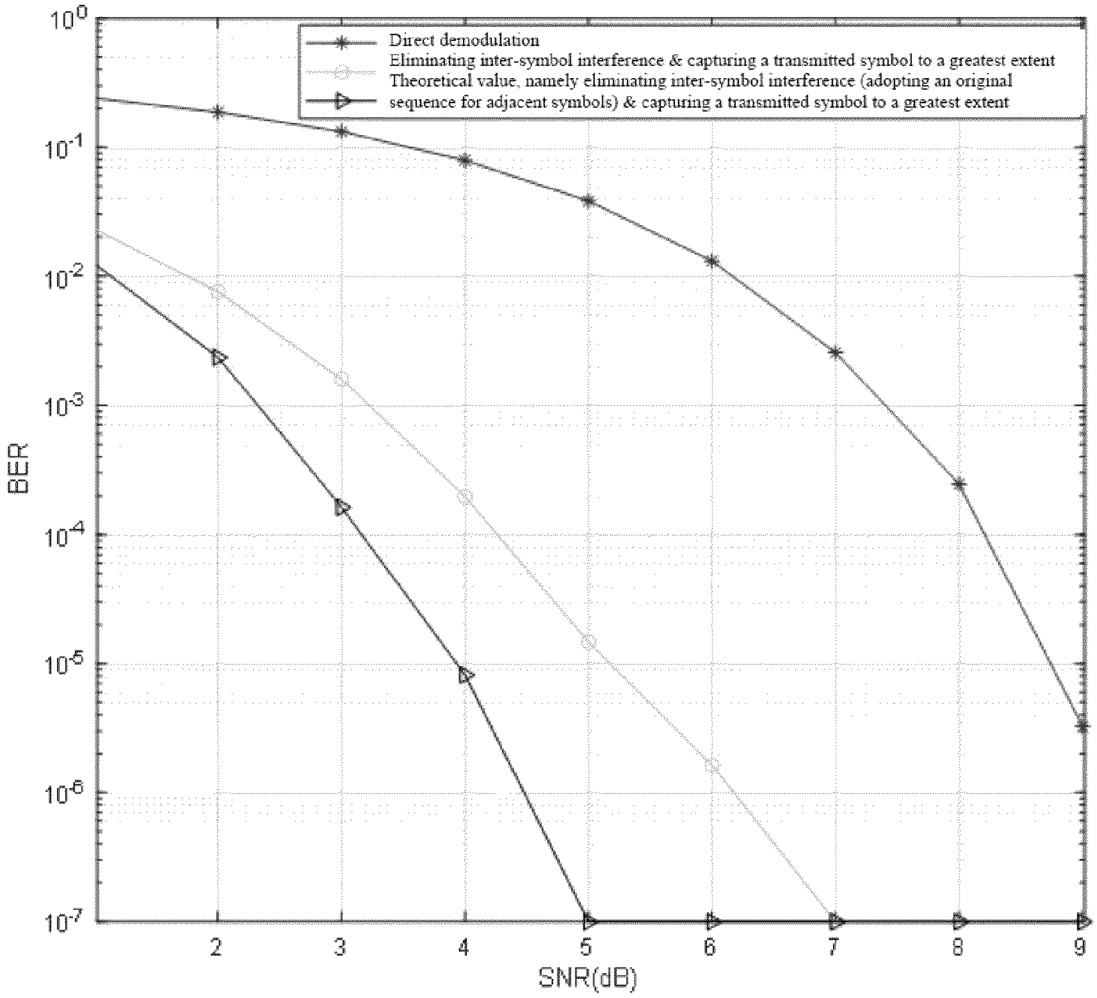
Direct demodulation
Eliminating inter-symbol interference & capturing a transmitted symbol to a greatest extent
Theoretical value, namely eliminating inter-symbol interference (adopting an original sequence for adjacent symbols) & capturing a transmitted symbol to a greatest extent
BER
10^0
10^-1
10^-2
10^-3
10^-4
10^-5
10^-6
10^-7
2
3
4
5
6
7
8
9
SNR(dB)

FIG. 4

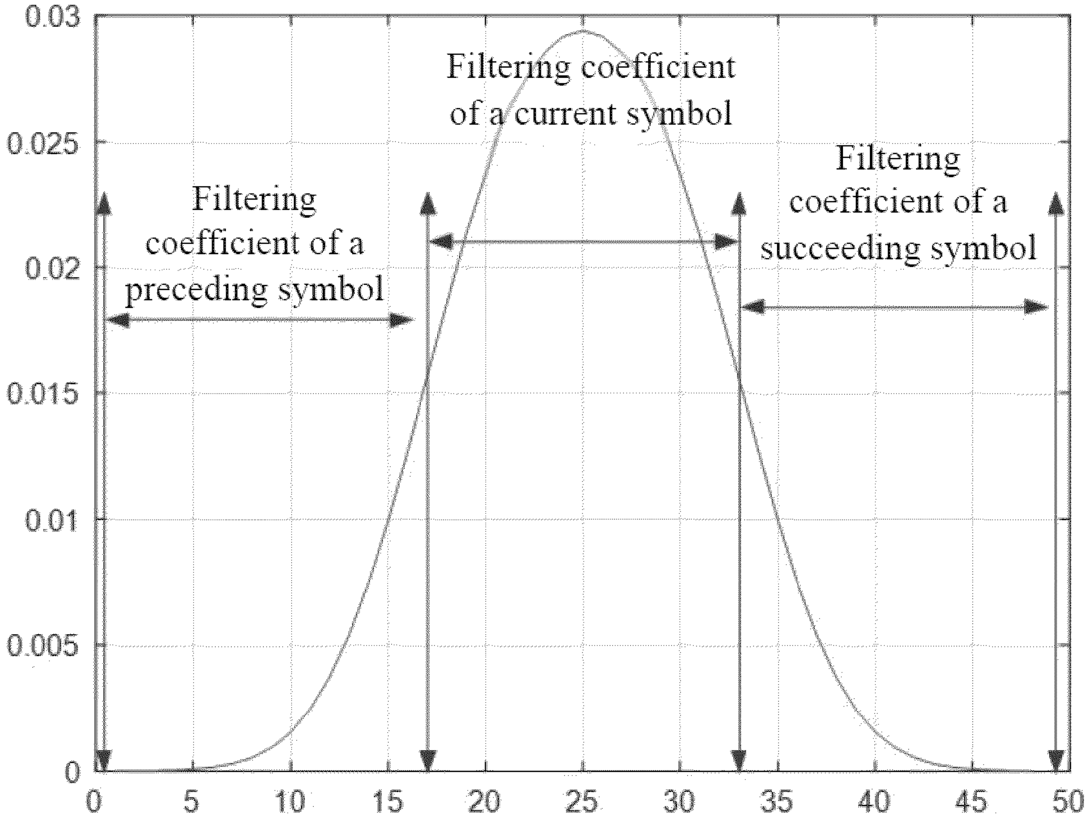
0.03
0.025
0.02
0.015
0.01
0.005
0
0
5
10
15
20
25
30
35
40
45
50
Filtering coefficient of a current symbol
Filtering coefficient of a preceding symbol
Filtering coefficient of a succeeding symbol

FIG. 5

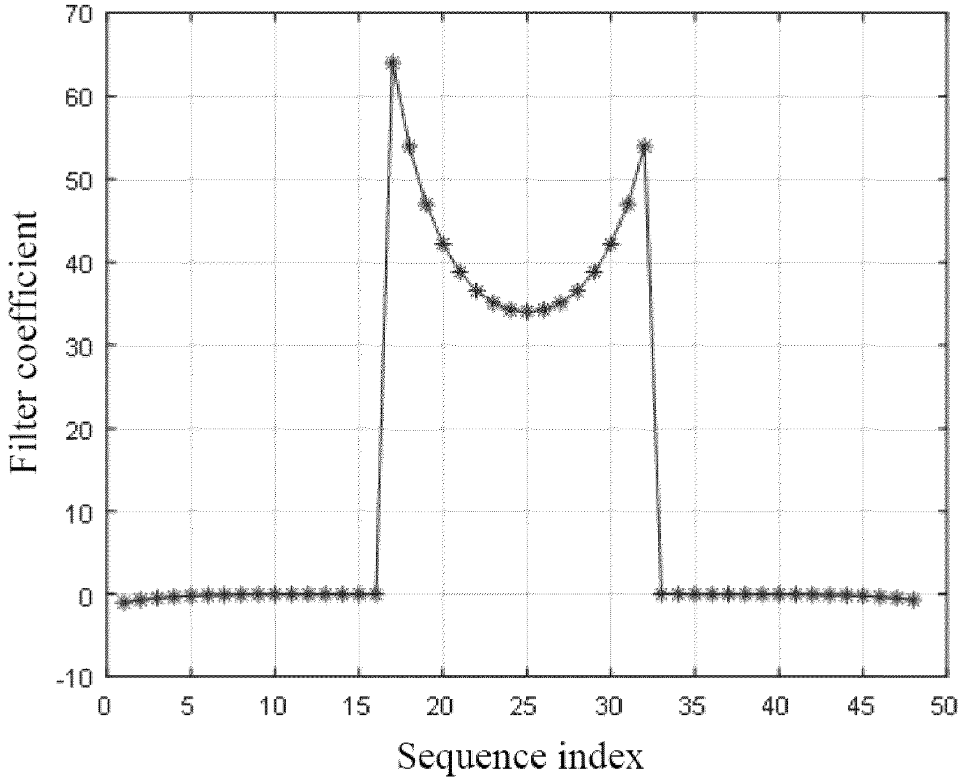
Filter coefficient
Sequence index
70
60
50
40
30
20
10
0
-10
0
5
10
15
20
25
30
35
40
45
50

FIG. 6

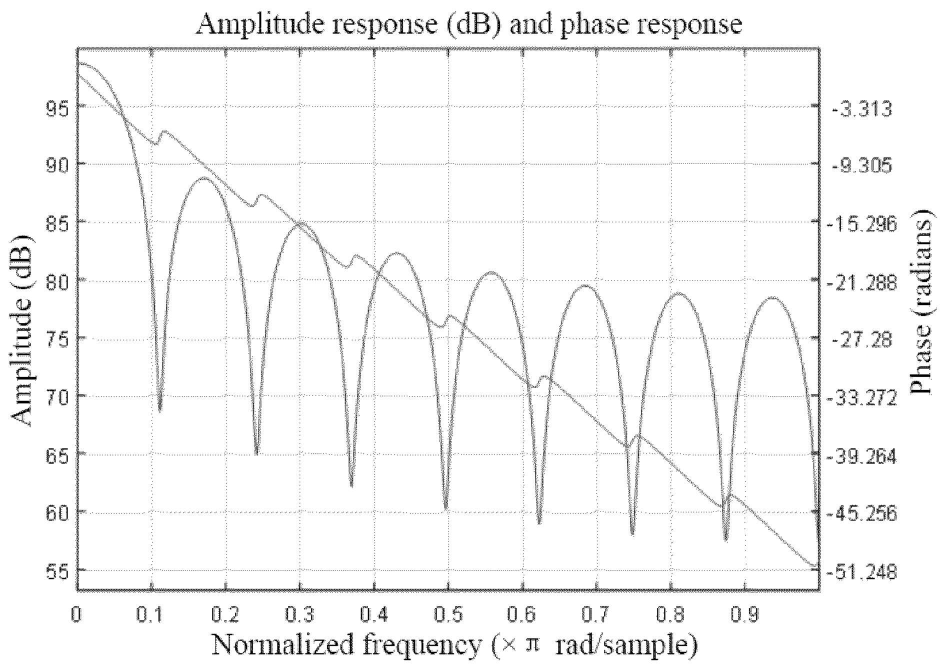
Amplitude response (dB) and phase response
Amplitude (dB)
Phase (radians)
Normalized frequency (× π rad/sample)
95
90
85
80
75
70
65
60
55
-3.313
-9.305
-15.296
-21.288
-27.28
-33.272
-39.264
-45.256
-51.248
0
0.1
0.2
0.3
0.4
0.5
0.6
0.7
0.8
0.9

FIG. 7

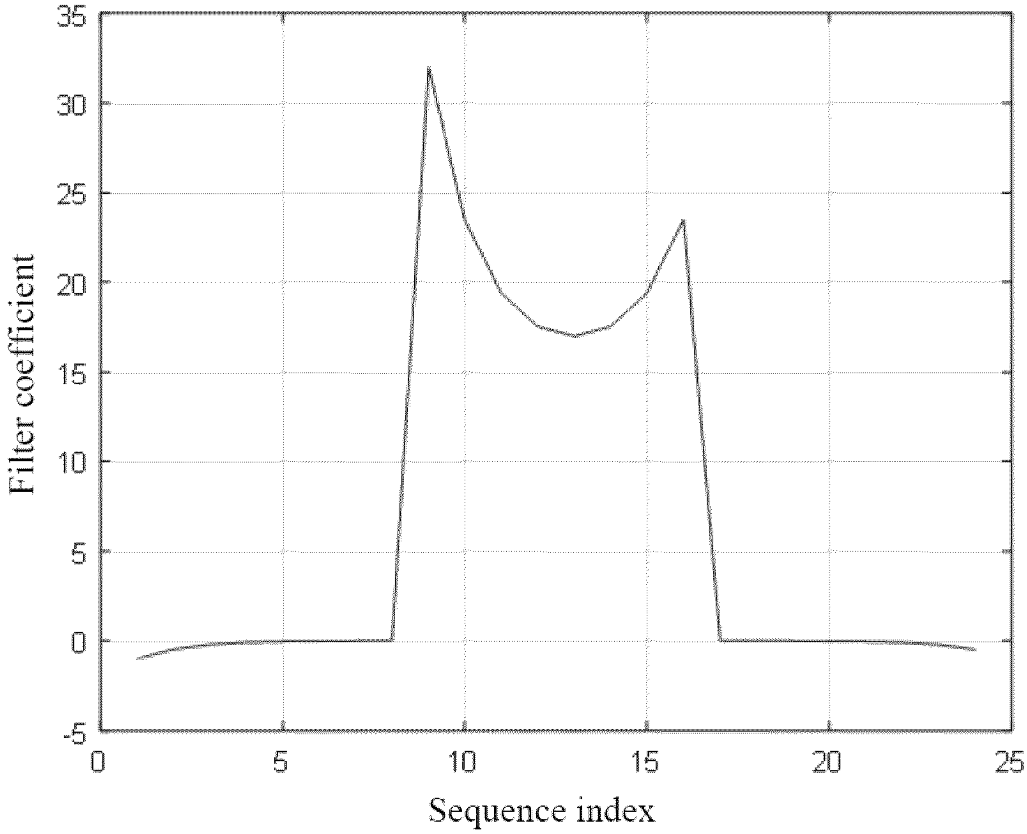
35
30
25
20
15
10
5
0
-5
0
5
10
15
20
25
Filter coefficient
Sequence index

FIG. 8

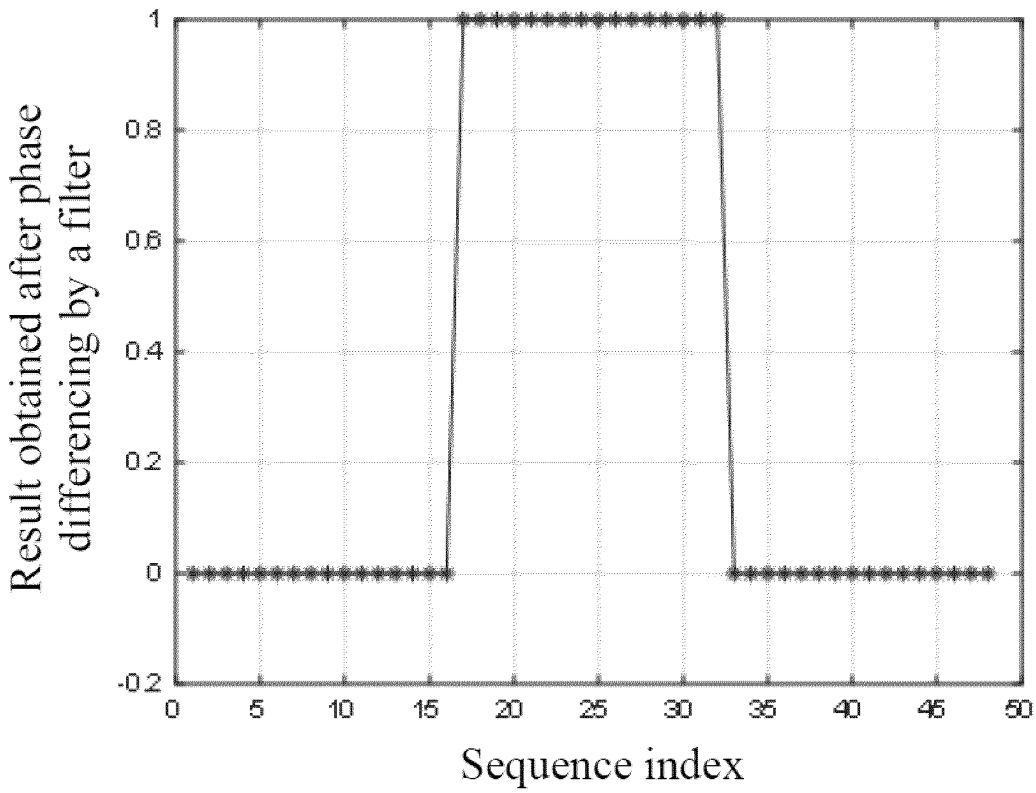
Result obtained after phase differencing by a filter
1
0.8
0.6
0.4
0.2
0
-0.2
0
5
10
15
20
25
30
35
40
45
50
Sequence index

FIG. 9

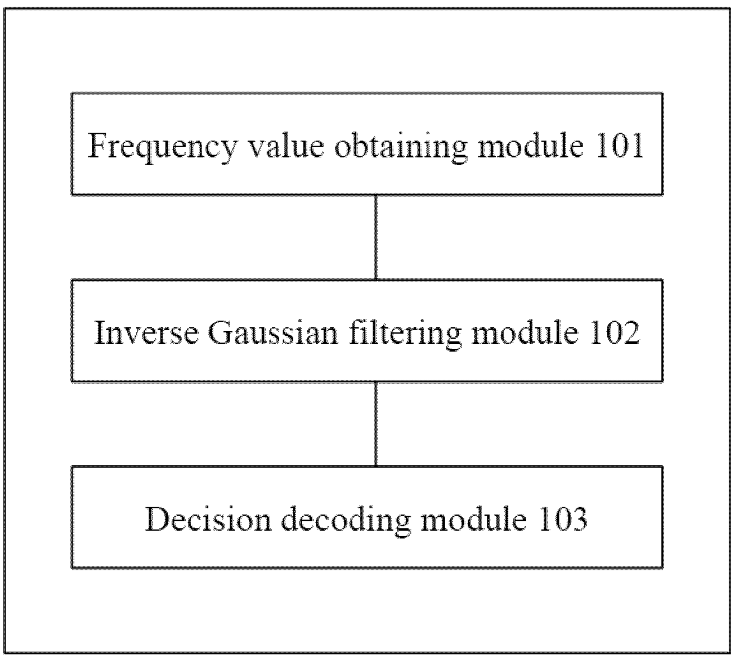
Frequency value obtaining module 101
Inverse Gaussian filtering module 102
Decision decoding module 103

FIG. 10

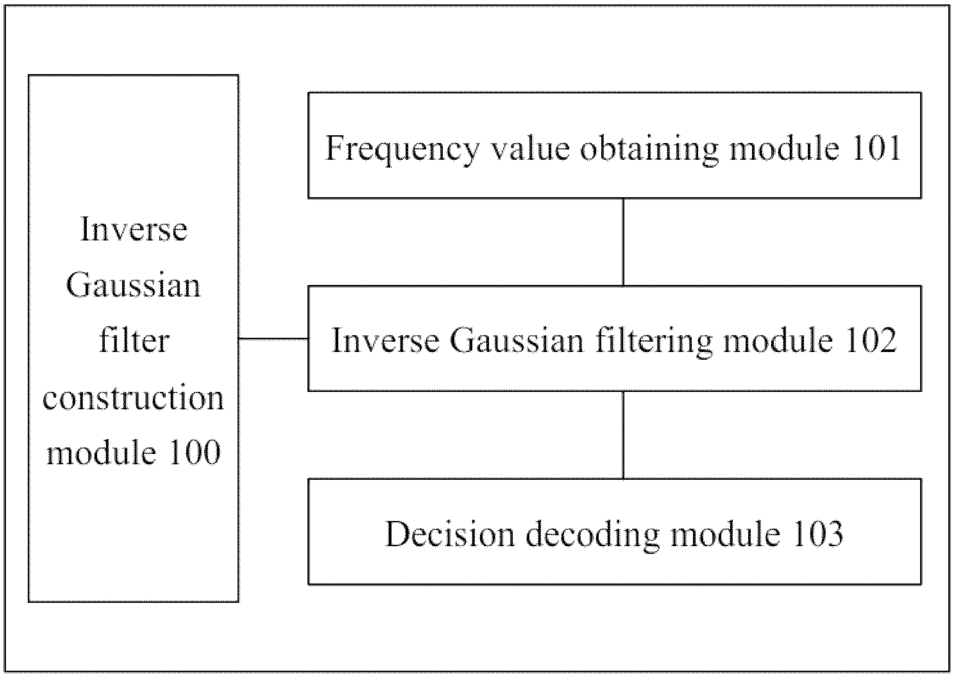
Inverse Gaussian filter construction module 100
Frequency value obtaining module 101
Inverse Gaussian filtering module 102
Decision decoding module 103

FIG. 11

## INTERNATIONAL SEARCH REPORT

International application No. **PCT/CN2023/122368**

**A. CLASSIFICATION OF SUBJECT MATTER**

H04L 27/148(2006.01)i

According to International Patent Classification (IPC) or to both national classification and IPC

**B. FIELDS SEARCHED**

Minimum documentation searched (classification system followed by classification symbols)

IPC: H04W,H04L

Documentation searched other than minimum documentation to the extent that such documents are included in the fields searched

Electronic data base consulted during the international search (name of data base and, where practicable, search terms used)

CJFD, CNTXT, DWPI, ENTXT, ENTXTC, IEEE: 反, 逆, 高斯, 高斯滤波, 高斯频移键控, 解码, 判决, 相位, 差分, GFSK, Inverse Gaussian filter, Gaussian filter, Inverse, Gaussian, Gaussian Frequency Shift Keying, Decod+, Decision, Phase, Differential

**C. DOCUMENTS CONSIDERED TO BE RELEVANT**

| Category* | Citation of document, with indication, where appropriate, of the relevant passages | Relevant to claim No. |
|---|---|---|
| X | CN 103155408 A (SENSUS USA INC.) 12 June 2013 (2013-06-12) description, paragraphs 0062-0074, and figure 3 | 1-3, 7-9, 11, 13-14 |
| A | CN 108141420 A (QUALCOMM INC.) 08 June 2018 (2018-06-08) entire document | 1-14 |
| A | CN 108337202 A (SAMSUNG ELECTRONICS CO., LTD.) 27 July 2018 (2018-07-27) entire document | 1-14 |
| A | US 2011142173 A1 (INTEGRATED SYSTEM SOLUTION CORP.) 16 June 2011 (2011-06-16) entire document | 1-14 |
| A | US 2022078056 A1 (HANGZHOU VANGO TECHNOLOGIES, INC.) 10 March 2022 (2022-03-10) entire document | 1-14 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **28 November 2023** | **06 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/122368**

| Patent document cited in search report | Publication date (day/month/year) | Patent family member(s) | Publication date (day/month/year) |
|---|---|---|---|
| CN 103155408 A | 12 June 2013 | CA 2806960 A1 | 02 February 2012 |
| | | ES 2708727 T3 | 10 April 2019 |
| | | RU 2013108855 A | 10 September 2014 |
| | | EP 2599217 A1 | 05 June 2013 |
| | | IL 224330 A | 21 April 2016 |
| | | WO 2012015509 A1 | 02 February 2012 |
| | | BR 112013002315 A2 | 24 May 2016 |
| | | JP 2013534385 A | 02 September 2013 |
| | | US 2012027132 A1 | 02 February 2012 |
| | | MX 2013001253 A | 24 June 2013 |
| | | AU 2011283184 A1 | 07 February 2013 |
| CN 108141420 A | 08 June 2018 | US 9571314 B1 | 14 February 2017 |
| | | WO 2017052998 A1 | 30 March 2017 |
| CN 108337202 A | 27 July 2018 | US 2018205470 A1 | 19 July 2018 |
| | | KR 20180085644 A | 27 July 2018 |
| US 2011142173 A1 | 16 June 2011 | TW 201132065 A | 16 September 2011 |
| US 2022078056 A1 | 10 March 2022 | CN 113489664 A | 08 October 2021 |

Form PCT/ISA/210 (patent family annex) (July 2022)